# FASCICULE DE BREVET EUROPEEN

(11) **EP 3 713 778 B1**
(45) Date de publication et mention de la délivrance du brevet: **22.11.2023**
(21) Numéro de dépôt: 18819539.0
(22) Date de dépôt: 22.11.2018
(51) Int. Cl.: B60C 13/00, B60C 1/00, B60C 13/02

(54) **PNEU DONT LE FLANC COMPORTE DES NERVURES**
REIFEN, DESSEN SEITENWAND RIPPEN AUFWEIST
TIRE, THE SIDEWALL OF WHICH COMPRISES RIBS

(30) Priorité: 22.11.2017 FR 1761040
(43) Date de publication de la demande: 30.09.2020
(73) Titulaire: Compagnie Générale des Etablissements Michelin, 63000 Clermont-Ferrand (FR)
(72) Inventeur: LICENSE, William, 63040 Clermont Ferrand Cedex 9 (FR); BABAUD, Jacques, 63040 Clermont-Ferrand Cedex 9 (FR)
(74) Mandataire: M.F.P. Michelin
(86) Numéro de dépôt international: PCT/FR2018/052952
(87) Numéro de publication internationale: WO 2019/102151

(56) Documents cités:
- JP-A- 2003 011 620
- JP-A- 2011 084 144
- JP-A- 2014 118 062
- US-A1- 2001 017 178

## Description

### Domaine de l'invention

La présente invention concerne un pneu, et plus particulièrement un pneu utilisé dans des chantiers, tels que, par exemple les camions, tracteurs, ou leurs remorques.

De façon générale, un pneu est un objet ayant une géométrie de révolution par rapport à un axe de rotation. Un pneu comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneu est usuellement décrite par une représentation de ses constituants dans un plan méridien, c'est-à-dire un plan contenant l'axe de rotation du pneu. Les directions radiale, axiale et circonférentielle désignent respectivement les directions perpendiculaire à l'axe de rotation du pneu, parallèle à l'axe de rotation du pneu et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneu. Les expressions « radialement intérieur, respectivement radialement extérieur » signifient « plus proche, respectivement plus éloigné, de l'axe de rotation du pneu, selon une direction radiale ». Le plan médian est un plan perpendiculaire à l'axe de rotation du pneu, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneu, selon la direction axiale ».

Les pneus destinés à équiper des véhicules circulant « hors la route », notamment dans des chantiers de bâtiments et travaux publics, comportent en général différents renforcements ou protecteurs dans leurs flancs, afin de les rendre plus résistants aux agressions, en particulier les rendre résistants aux coupures par des objets métalliques tranchants ou effilés, comme des tiges métalliques, par exemple des morceaux de fers à béton.

Par exemple, par le document JP61081207, il est connu d'ajouter dans la zone allant de 30% jusqu'à 75% de la hauteur du flanc, trois ou plus de trois nervures circonférentielles, de section méridienne arrondie, faisant protubérance par rapport à la surface extérieure du flanc. Par le document US20130263993, on connait aussi un pneu dont la partie radialement supérieure du flanc comporte un ensemble de nervures formant protecteur, chaque nervure ayant une section méridienne ayant l'allure d'un triangle rectangle, dont le sommet d'angle sensiblement droit est disposé radialement vers l'intérieur, la base du triangle rectangle étant sensiblement confondue avec la face extérieure du flanc, le grand côté du triangle rectangle étant disposé radialement vers l'extérieur et le petit côté du triangle rectangle étant disposé radialement vers l'intérieur. Le document US 2001/017178 A1 concerne un pneu, plus particulièrement une structure de flanc capable d'améliorer la durabilité à grande vitesse sur les routes de campagne.

L'invention se fixe pour objectif de réduire significativement la masse de tels pneus sans obérer leur capacité à résister aux agressions en usage « hors la route ».

### Brève description de l'invention

Ce but est atteint, selon l'invention, par un pneu comprenant une armature de carcasse surmontée d'une armature de sommet, elle-même coiffée d'une bande de roulement, ladite bande de roulement étant réunie à deux bourrelets par l'intermédiaire de deux flancs ayant chacun une surface extérieure, au moins l'un desdits flancs comportant au moins deux protubérances circonférentielles, chaque flanc comportant un point équateur situé sur la surface extérieure du flanc radialement à la même position que le point axialement le plus extérieur de l'armature de carcasse en configuration de référence non chargée, chaque protubérance circonférentielle étant limitée par une paroi radialement supérieure, par une paroi radialement inférieure, et par une paroi de raccordement située entre la paroi radialement supérieure et la paroi radialement inférieure, chaque protubérance circonférentielle étant caractérisée en ce que :
- la paroi de raccordement est sensiblement parallèle à l'armature de carcasse considérée axialement en regard de ladite paroi de raccordement,
- la paroi radialement supérieure est sensiblement tronconique,
- la hauteur de chaque protubérance circonférentielle, mesurée selon une direction sensiblement perpendiculaire à l'armature de carcasse à partir de ladite surface extérieure est supérieure au minimum de 0,8 fois l'épaisseur totale du flanc mesurée à l'équateur et 4 mm, et est inférieure au maximum de 1,6 fois ladite épaisseur et 8 mm,
- dans le plan méridien au centre de l'aire de contact du pneu en configuration écrasée, l'angle α que forme la paroi radialement extérieure avec la direction radiale est, pour la protubérance radialement la plus à l'extérieur, supérieur à 95°,
- la position radiale la plus intérieure de la paroi de raccordement de la protubérance radialement la plus intérieure est située radialement à l'extérieur du point équateur.

Le point équateur du flanc dont il est question dans le présent mémoire est le point situé sur la surface du flanc juste en regard de l'équateur de l'armature de carcasse, l'équateur de l'armature de carcasse étant le point à la surface axialement extérieure de l'armature de carcasse qui est situé axialement le plus vers l'extérieur du pneu. On peut identifier ce point équateur par exemple par tomographie du pneu monté sur une jante de référence et gonflé à la pression nominale (voir les normes ETRTO), en configuration de référence non chargée. Chaque flanc comporte un tel point équateur, situé sur la surface extérieure du flanc, radialement à la même position que le point axialement le plus extérieur de l'armature de carcasse ; si celle-ci comporte plusieurs couches de carcasse, souvent appelées « nappes », on considérera la couche axialement la plus extérieure.

Il est indiqué ci-dessus que la paroi radialement supérieure est sensiblement tronconique. Cela signifie qu'un léger bombé permet aussi d'obtenir le résultat visé par l'invention. Afin de bien comprendre comment on procède au relevé de profil pour déterminer l'angle que forme avec la direction radiale la paroi radialement extérieure de chaque protubérance, le lecteur est renvoyé à la description des figures faite ci-dessous, plus particulièrement au paragraphe 38.

En outre, dans l'invention, on a observé expérimentalement que, comme règle de bonne pratique, pour chaque protubérance, la longueur curviligne de la paroi de raccordement est avantageusement supérieure à 1,5 fois, et même 2,5 fois la hauteur de la protubérance.

La protection du pneu s'avère remarquable si chaque flanc comporte au moins trois protubérances.

Quant à l'angle α que forme avec la direction radiale la paroi radialement extérieure de la protubérance radialement la plus à l'extérieur, il est de préférence supérieur à 105°.

En considérant l'ensemble des protubérances sur chaque flanc, de préférence, l'angle que forme avec la direction radiale la paroi radialement extérieure desdites protubérances est avantageusement de valeur décroissante quand on passe d'une protubérance à la suivante en se rapprochant de l'équateur, c'est-à-dire en se déplaçant radialement vers l'intérieur.

Notons encore que, de préférence, la plus petite valeur de l'angle α est, pour l'ensemble des protubérances, supérieur à 90°.

Pour une mise en oeuvre la plus économique de l'invention, chaque protubérance est constituée par la même composition de caoutchouc que la partie du flanc formant ladite surface extérieure. A titre d'exemple, la composition de flanc externe du pneu selon l'invention comprend un ou plusieurs élastomères diéniques. Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Cependant, selon un aspect ne faisant pas partie de l'invention, si l'on veut améliorer encore la performance du pneu en résistance aux endommagements par des ferrailles, afin de favoriser le glissement de celles-ci, chaque protubérance (ou au moins celles radialement les plus à l'extérieur) comporte une composition de caoutchouc comportant au moins 8 pce de cire anti-ozone.

La cire anti-ozone utilisable selon un aspect ne faisant pas partie de l'invention, peut être, notamment, une cire naturelle, une cire synthétique ou un mélange de cire naturelle et de cire synthétique. Par exemple, la cire anti-ozone peut être une cire naturelle choisie dans le groupe constitué par les cires minérales, tels que les cires paraffiniques, les cires végétales, les cires animales, et leurs mélanges. La cire anti-ozone peut également être une cire synthétique choisie dans le groupe constituée par les cires de Fischer-Tropsch, les cires de polyéthylène et leurs mélanges.

De manière avantageuse, la cire anti-ozone est choisie dans le groupe constitué par les cires paraffiniques, les cires de Fischer-Tropsch et leurs mélanges. De préférence, la cire anti-ozone est un cire paraffinique ou un mélange de cires paraffiniques.

De manière avantageuse, la cire anti-ozone comprend majoritairement, et de manière avantageuse est constituée par, des chaines hydrocarbonées linéaires ou ramifiées dont le nombre d'atomes de carbone est compris dans un domaine allant de 18 à 70, de préférence de 18 à 65, de préférence encore de 18 à 60, de préférence de 18 à 55, de préférence de 18 à 50, de préférence de 22 à 38. De préférence, les chaines hydrocarbonées de la cire anti-ozone sont essentiellement saturées. Par « essentiellement saturé », on entend un taux de motif diénique inférieur à 15%, de préférence inférieur à 10%, de préférence inférieur à 5%, par exemple 0%.

Le ratio de chaines hydrocarbonées ramifié (iso) / non ramifié (normal) dans la cire anti-ozone peut être compris dans un domaine allant de 0/100 à 80/20, de préférence de 5/95 à 65/35, de préférence encore de 5/95 à 35/65, de manière encore plus préférentielle de 5/95 à 20/80.

De telles cires anti-ozones existent dans le commerce, par exemple, les cires Redezon (par exemple les séries 500, PWM-80, 7335-G, 7812) de la société Repsol, les cires Varazon (par exemplres les séries 5998, 4959, 6810) de la société Sasol, la cire Ozoace 0355 de la société Nippon Seiro, la cite OK2122 ou OK5258H de la société Paramelt Co., Ltd.

Ou encore, de façon avantageuse, selon un aspect ne faisant pas partie de l'invention, chaque protubérance comporte une composition de caoutchouc comprenant un amide de formule (I) : 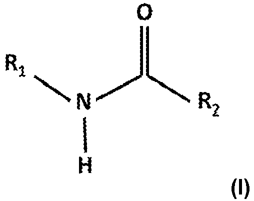
- où R₁ représente :
   o un radical alkylène, linéaire ou ramifié, comprenant de 1 à 6 atomes de carbone substitué par un radical amide de formule (II), 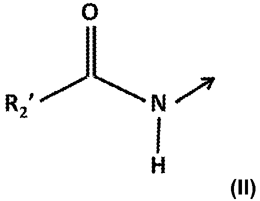 dans laquelle :
      ▪ R₂' représente un radical hydrocarboné, linéaire ou ramifié, comprenant de 12 à 24 atomes de carbone, et
      ▪ la flèche (->) représente le point d'attachement du radical amide de formule (II) ;
   o un radical alkyle, linéaire ou ramifié, comprenant de 1 à 6 atomes de carbone, ou
   o un atome d'hydrogène :
- où R₂ représente un radical hydrocarboné, linéaire ou ramifié, comprenant de 12 à 24 atomes de carbone.

Par "alkylène, linaire ou ramifié, comprenant 1 à 6 atomes de carbone ", on entend, une chaîne hydrocarbonée bivalente, linéaire ou ramifiée, comportant 1 à 6 atomes de carbone. A titre d'exemple, on peut citer notamment les groupes - (CH₂)- , -(CH₂)₂- , -(CH₂)₃- , -(CH₂)₄- , -(CH₂)₅- , -(CH₂)₆- , -CH₂-CH(CH₃)- , -CH₂-CH(CH₃)-CH₂- , - (CH₂)₂-CH(CH₃)-CH₂- , -(CH₂)₂-CH(CH₃)-(CH₂)₂-,

Par groupement "alkyle, linaire ou ramifié, comprenant 1 à 6 atomes de carbone", on entend, une chaîne hydrocarbonée monovalente, linéaire ou ramifiée, comportant 1 à 6 atomes de carbone. A titre d'exemple, on peut citer notamment les groupes méthyle, éthyle, propyle, butyle, isobutyle, pentyle ou encore hexyle.

Selon que R₁ représente :
- un radical alkylène, linéaire ou ramifié, comprenant de 1 à 6 atomes de carbone substitué par un radical amide de formule (II),
- un radical alkyle, linéaire ou ramifié, comprenant de 1 à 6 atomes de carbone, ou
- un atome d'hydrogène,
l'amide de formule (I) est respectivement représenté par les formules (III), (IV) ou (V) : 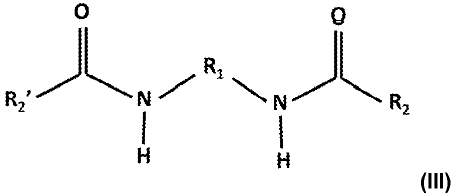 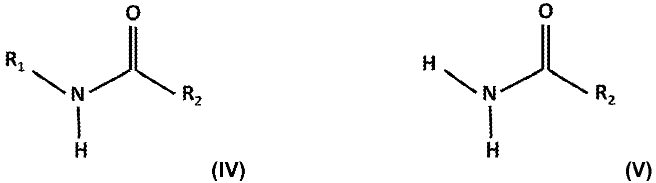 dans lesquelles, R₂ et R₂' représentent, indépendamment l'un de l'autre, un radical hydrocarboné, linéaire ou ramifié, comprenant de 12 à 24 atomes de carbone.

De manière avantageuse, R₁ représente un radical alkylène, linéaire ou ramifiée, comprenant de 1 à 6 atomes de carbone, substitué par un radical amide de formule (II), ou bien un atome d'hydrogène. De préférence encore, R₁ représente un radical alkylène, linéaire ou ramifiée, comprenant de 1 à 6 atomes de carbone, substitué par un radical amide de formule (II).

Lorsque R₁ représente un radical alkylène, linéaire ou ramifiée, comprenant de 1 à 6 atomes de carbone, substitué par un radical amide de formule (II), la flèche représente avantageusement une liaison covalente entre l'atome d'azote du radical de formule (II) et un des atomes de carbone du radical alkylène.

Selon un aspect ne faisant pas partie de l'invention, le radical alkyle ou alkylène du groupement R₁ comprend de préférence de 2 à 4 atomes de carbone, de préférence encore 2 atomes de carbone.

Par ailleurs, quelle que soit leur nature R₁, R₂ et R₂' représentent avantageusement, indépendamment l'un de l'autre, un radical hydrocarboné, linéaire ou ramifié, comprenant de 14 à 22, de préférence de 14 à 20 atomes de carbone.

Par ailleurs, quelle que soit la nature de R₁, et quel que soit le nombre d'atomes de carbone de R₂ et R₂', les radicaux hydrocarbonés de R₂ et R₂' peuvent comprendre indépendamment l'un de l'autre un nombre d'insaturations allant de 1 à 6, de préférence de 1 à 4. De préférence encore, les radicaux hydrocarbonés de R₂ et R₂' comprennent de 1 à 3, de préférence, 1 ou 2 insaturations. Alternativement, les radicaux hydrocarbonés de R₂ et R₂' peuvent être saturés, c'est-à-dire ne comporter aucune insaturation.
Comme indiqué ci-dessus, R₂ et R₂' peuvent être identiques ou différents. De manière avantageuse, R₂ et R₂' sont identiques.

Selon un aspect ne faisant pas partie de l'invention, l'amide de formule (I) peut être choisi dans le groupe constitué par l'oléamide, le stéaramide, le N,N'-éthylènebis(oléamide), le N,N'-éthylènebis(stéaramide) et les mélanges de ces amides. De manière très avantageuse, l'amide de formule (I) est le N,N'- éthylènebis(oléamide). De tels composés sont disponibles dans le commerce, par exemple, le stéaramide est commercialisé sous la dénomination « Crodamide SR » par la société Croda, le N,N'-éthylènebis(oléamide) est commercialisé sous la dénomination « Crodamide EBO » par la société Croda, le N,N'-éthylènebis(stéaramide) est commercialisé sous la dénomination « Crodamide EBS » par la société Croda.

Selon un aspect ne faisant pas partie de l'invention, le taux d'amide de formule (I) peut être compris dans un domaine allant de 1 à 15 pce, de préférence de 2 à 10 pce, de préférence de 3 à 8 pce, de préférence entre 3 et 6 pce.

Les inventeurs ont ainsi su mettre en évidence que l'invention permet d'alléger le pneu en réduisant les épaisseurs du flanc dans les zones non couvertes par les protubérances et contre toute attente de conserver des propriétés en termes d'endurance satisfaisantes, voire de les améliorer.

### Brève description des figures

D'autres détails et caractéristiques avantageux de l'invention ressortiront ci-après de la description des exemples de réalisation de l'invention notamment en référence aux figures suivantes qui représentent :
- la figure 1, une vue méridienne partielle d'une mise en oeuvre particulière de l'invention ;
- la figure 2, une vue méridienne partielle de la mise en oeuvre de la figure 1, le pneu étant soumis à une charge ;
- la figure 3, un agrandissement de la zone III repérée à la figure 2 ;
- la figure 4, une première variante de réalisation de l'invention ;
- la figure 5, une deuxième variante de réalisation de l'invention ;

### Description détaillée de l'invention

Les figures ne sont pas représentées à l'échelle pour en simplifier la compréhension. L'invention est illustrée par une application à un pneu.

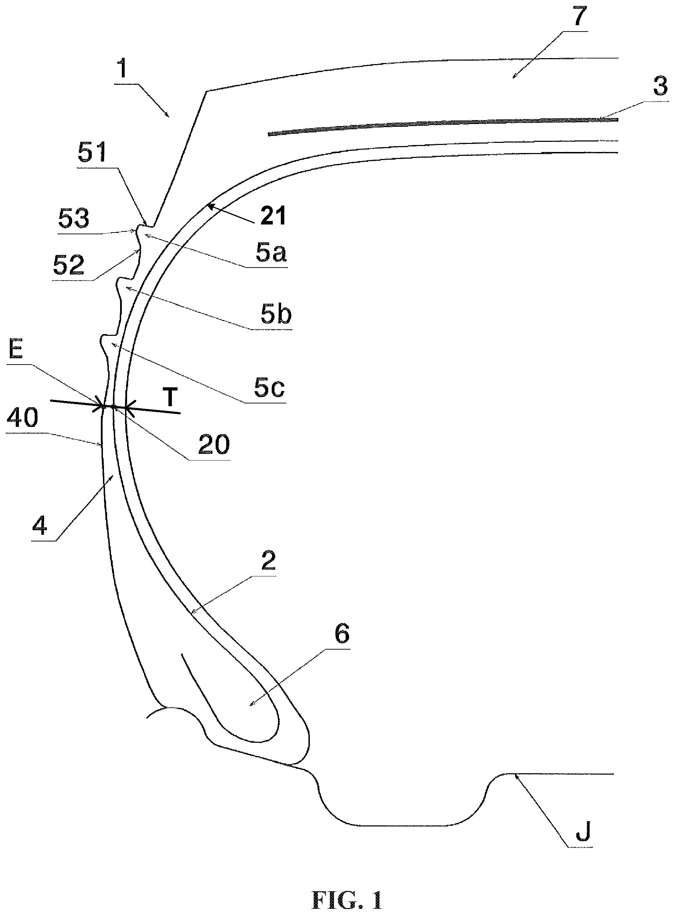

A la figure 1, on voit, partiellement, un pneu 1 monté sur sa jante de référence J et gonflé à sa pression nominale, comprenant une armature de carcasse 2 surmontée d'une armature de sommet 3 ; on voit également une bande de roulement 7, un bourrelet 6 et un flanc 4 ; le flanc 4 présente une surface extérieure 40 sur laquelle on voit trois protubérances circonférentielles 5a, 5b et 5c ; soulignons que, les protubérances étant circonférentielles, toute section méridienne du pneu, en n'importe quel azimut, présente un profil identique. On repère sur le flanc 4 un point équateur E en regard du point 20 de l'armature de carcasse axialement le plus à l'extérieur, et radialement à la même hauteur que le point 20.

En se reportant plus particulièrement à la protubérance 5a, on repère sur chaque protubérance circonférentielle une paroi radialement supérieure 51, une paroi radialement inférieure 52, et une paroi de raccordement 53 située entre la paroi radialement supérieure 51 et la paroi radialement inférieure 52 ; bien entendu, chaque protubérance comporte de telles parois supérieure, inférieure et de raccordement, la figure 1 étant délibérément allégée de la multiplication de références inutile à l'intelligence de l'invention.

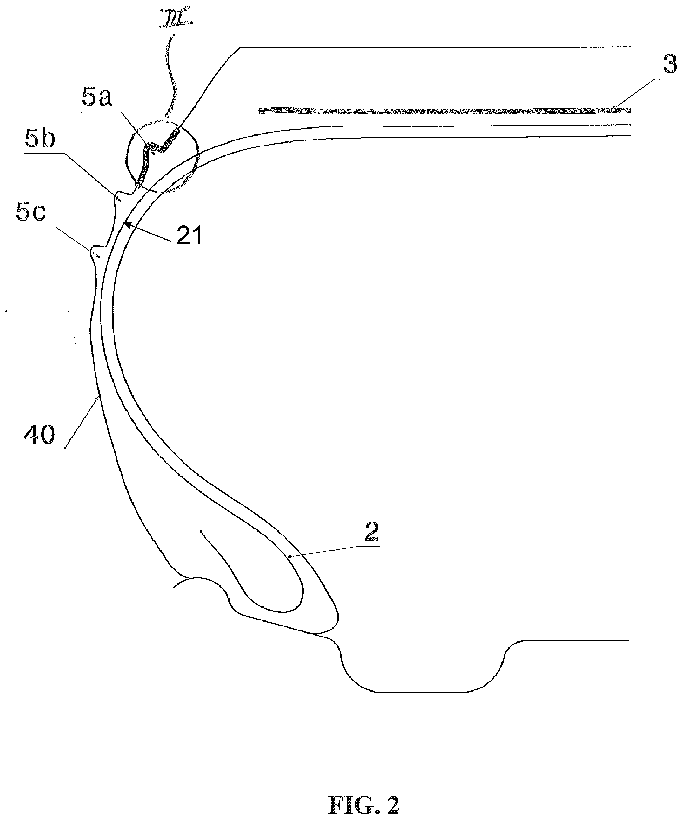

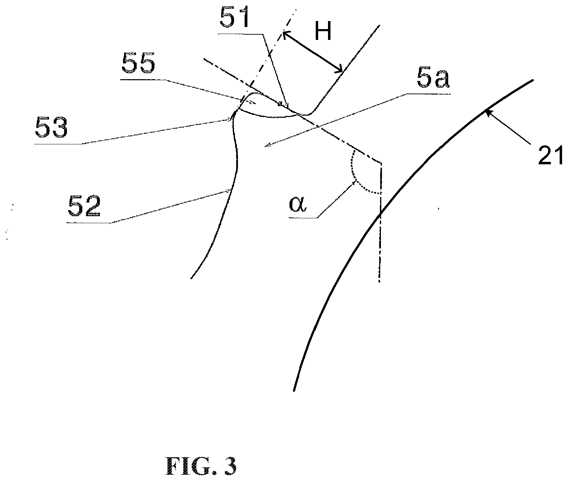

A la figure 2, on voit, partiellement, le profil du même pneu 1 monté sur sa jante de référence, gonflé à sa pression nominale, et cette fois écrasé sous l'effet d'une charge nominale. Ce profil pris au centre de l'aire de contact du pneu au sol porte couramment le nom de « profil écrasé ». La figure 3 illustre plus particulièrement la configuration de la paroi radialement supérieure, plus précisément la zone visée par le cercle III à la figure 2. Rappelons que la figure 2 est une coupe (vue partielle) par plan méridien au centre de l'aire de contact du pneu en configuration écrasée, c'est à dire considéré monté sur jante de référence et gonflé à pression nominale et écrasé à sa charge nominale (on se reportera aux normes, par exemple la norme ETRTO). L'angle α est l'angle que forme la paroi radialement extérieure 51 avec la direction radiale. Cette paroi pouvant être légèrement bombée, par convention et comme on le voit à la figure 3, l'angle à considérer est l'angle limité par la tangente à mi-hauteur de la paroi.

Dans la mise en oeuvre de l'invention illustrée avec la figure 1, la protubérance a une paroi radialement supérieure 51 sensiblement plane. La paroi de raccordement 53 est sensiblement parallèle au câble 21 de l'armature de carcasse 2. Soulignons qu'il peut y avoir plus de variabilité pour la forme de la paroi radialement intérieure 52 : assez indifféremment quant à la performance d'un pneu selon l'invention, elle peut être tronconique, elle peut présenter une rupture de pente comme sur la figure 1, ou encore laisser une trace en arc de cercle dans sa section par un plan méridien. Il y a bien entendu des congés de raccordement. A la jonction avec la surface extérieure 40 du flanc 4, chaque protubérance, vue en coupe par un plan méridien, se termine par un tracé de préférence parallèle au tracé de l'armature de carcasse 2. A titre d'exemple, pour un pneu de dimension 12 R 22.5, chaque protubérance 5 (lorsque l'on n'accompagne pas la référence 5 ou 51, 52, 53 d'un suffixe, on vise une caractéristique générique valable pour toutes les protubérances quelle que soit leur position) a une base mesurant environ 15 mm, une hauteur H de 5,5 mm, une paroi de raccordement 53 mesurant 3,5 mm.

Abordons maintenant le matériau constituant les protubérances 5. Les résultats montrent une très forte diminution du coefficient de frottement µ des compostions conformes à l'invention comprenant un amide de formule (I). Ainsi, la présente invention permet d'améliorer significativement la durée de vie de pneus, puisque ceux-ci deviennent beaucoup moins sensibles aux agressions extérieures. Dans l'exemple de mise en oeuvre de l'invention, est utilisé un mélange comportant 10 pce de cire, pour la première partie 55 (voir figure 3), radialement et axialement extérieure, de chaque protubérance 5 ; ce mélange avec cire affleure et forme la totalité de la paroi radialement supérieure 51 et une partie de la paroi de raccordement 53. Le mélange de caoutchouc constituant les flancs 4 est également présent dans la seconde partie, radialement et axialement intérieure, de chaque protubérance 5, sur une épaisseur supérieure à 0,8 mm. L'homme du métier comprend aisément qu'il suffit qu'un mélange de caoutchouc à faible coefficient de frottement, c'est-à-dire glissant, soit disposé en enveloppe partielle de la protubérance, pour obtenir les avantages spécifiques à ce mode de réalisation préféré de l'invention.

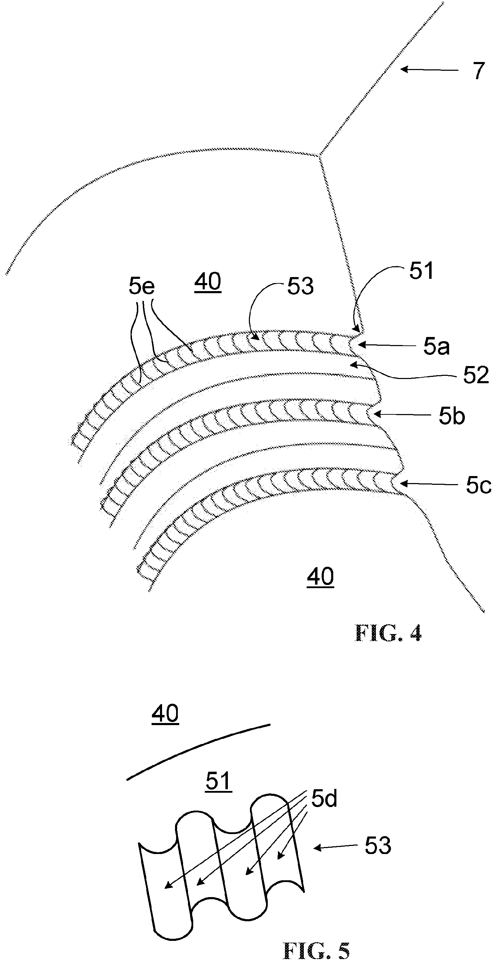

D'autres aspects de mise en oeuvre particulière de l'invention peuvent être adoptés. Par exemple, sur la paroi de raccordement 53 des protubérances, on peut prévoir, comme montré à la figure 4, des incisions 5e disposées sensiblement dans un plan méridien, de hauteur radiale comprise entre 0,5 mm et 2 mm, espacées circonférentiellement d'un pas supérieur au double du maximum entre la profondeur des incisions et la hauteur (H) de la protubérance, et inférieur à 10 mm, de préférence valant de 1,5 à 3 mm, de profondeur axiale comprise entre 25% et 50% de la hauteur de la protubérance. Ceci permet de mieux résister à l'abrasion quand le pneu frotte sur un trottoir. Certaines protubérances seulement peuvent être ainsi pourvues d'incisions, et dans ce cas c'est préférentiellement celles qui sont proches de l'équateur qui sont pourvues d'incisions.

En variante, sur la paroi de raccordement 53 des protubérances, comme montré à la figure 5, on peut prévoir une suite dans la direction circonférentielle de surfaces concaves et convexes 5d dont la hauteur crête-crête est supérieure à 2 mm et inférieure à 80 % de la hauteur de la protubérance. Le caractère concave ou convexe se juge depuis l'intérieur de la cavité du pneu. Sur la figure 5, les surfaces concaves et convexes sont des demi-cylindres de rayons identiques mais la génératrice peut être constituée d'une suite d'ellipses ou d'autres formes tels que des splines. Les parties concaves et convexes peuvent être de formes différentes et dans ce cas, la partie convexe a préférentiellement une hauteur supérieure à la partie concave. La forme réelle est donnée par l'intersection du profil méridien des protubérances et par la suite circonférentielle de surfaces concaves et convexes 5d. Cela permet aussi de mieux résister à l'abrasion.

On teste quatre variantes de pneus dans les conditions suivantes :
- Un pneu classique (MICHELIN^{®} 12R22.5 XZE2+) de référence, désigné par T1 ;
- Le même pneu classique, sauf l'épaisseur flanc réduite de 2 mm, donc plus léger que T1 de 1.3 kg, désigné T2 ;
- le même pneu classique, sauf un mélange de flanc qui est dopé à 10 pce de cire, désigné par T3 ;
- Un pneu selon l'invention, avec l'épaisseur réduite de 2 mm (voir T2) et comportant trois cordons tels que décrits aux figures 1 et 2, plus léger que T1 de 1.1 kg, désigné par T4
- Un pneu avec l'épaisseur réduite de 2 mm et avec trois cordons tels que décrits aux figures 1 et 2, un mélange de flanc avec 10 pce de cire, désigné par T5.

Tous les pneus sont gonflés à 9 bar, et chargés de 3500 kg. On procède à un roulage guidé par des rails, en utilisant comme élément agressif pour le pneu une tige cylindrique dont l'extrémité venant en contact avec le pneu est une demi-sphère, de rayon 15mm, orientée perpendiculairement à la direction d'avancée du pneu, et faisant un angle de 50° par rapport à la verticale, et positionné latéralement au bord de la bande de roulement. On monte progressivement la tige et l'on observe la hauteur de la tige à partir de laquelle le flanc est percé. On répète la mesure sur trois exemplaires de chacun des pneus T1, T2, T3, T4 et T5 et on retient la valeur moyenne.

Le tableau suivant donne les résultats :

| | Pneu | Hauteur |
|---|---|---|
| | T1 | 125 |
| | T2 | 115 |
| | T3 | 125 |
| | T4 | 125 |
| | T5 | 130 |

On constate donc que la présence des cordons permet de conserver la performance du pneu témoin avec une baisse de masse de 1 kg et que l'ajout d'un mélange glissant sur les bords extérieurs des cordons améliore la performance alors que sur un pneu classique, ce mélange est neutre.

## Revendications

1. Pneu (1) comprenant une armature de carcasse (2) surmontée d'une armature de sommet (3), elle-même coiffée d'une bande de roulement (7), ladite bande de roulement étant réunie à deux bourrelets (6) par l'intermédiaire de deux flancs (4) ayant chacun une surface extérieure (40), au moins l'un desdits flancs comportant au moins deux protubérances circonférentielles (5a, 5b, 5c), chaque flanc (4) comportant un point équateur (E) situé sur la surface extérieure du flanc radialement à la même position que le point axialement le plus extérieur (20) de l'armature de carcasse (2) en configuration de référence non chargée, chaque protubérance circonférentielle (5a, 5b, 5c) étant limitée par une paroi radialement supérieure (51), par une paroi radialement inférieure (52), et par une paroi de raccordement (53) située entre la paroi radialement supérieure (51) et la paroi radialement inférieure (52), où pour chaque protubérance circonférentielle:
• la paroi de raccordement (53) est sensiblement parallèle à l'armature de carcasse considérée axialement en regard de ladite paroi de raccordement (53),
• la paroi radialement supérieure (51) est sensiblement tronconique,
• la hauteur (H) de chaque protubérance circonférentielle (5a, 5b, 5c), mesurée selon une direction sensiblement perpendiculaire à l'armature de carcasse (2) à partir de ladite surface extérieure (40) est supérieure au minimum de 0,8 fois l'épaisseur totale (T) du flanc mesurée à l'équateur (E) et 4 mm, et est inférieure au maximum de 1,6 fois ladite épaisseur (T) et 8 mm,
• dans le plan méridien au centre de l'aire de contact du pneu en configuration écrasée, l'angle α que forme avec la direction radiale la paroi radialement extérieure (51) est, pour la protubérance (5a) radialement la plus à l'extérieur, supérieur à 95°,
• la position radiale la plus intérieure de la paroi de raccordement (53) de la protubérance (5c) radialement la plus intérieure est située radialement à l'extérieur du point équateur (E),
chaque protubérance circonférentielle étant **caractérisée en ce que** :
• pour chaque protubérance (5a, 5b, 5c), la longueur curviligne de la paroi de raccordement est supérieure à 1,5 fois la hauteur de la protubérance.

2. Pneu selon la revendication 1 **caractérisé en ce que**, pour chaque protubérance (5a, 5b, 5c), la longueur curviligne de la paroi de raccordement est supérieure à 2,5 fois la hauteur de la protubérance.

3. Pneu selon l'une des revendications précédentes, **caractérisé en ce que** chaque flanc comporte au moins trois protubérances (5a et 5b et 5c).

4. Pneu selon l'une des revendications précédentes, **caractérisé en ce que** ledit l'angle α est, pour la protubérance (5a) radialement la plus à l'extérieur, supérieur à 105°.

5. Pneu selon l'une quelconque des revendications 1 à 3, caractérisé en ce ledit angle α est de valeur décroissante quand on passe d'une protubérance à la suivante en se rapprochant de l'équateur.

6. Pneu selon l'une quelconque des revendications 1 à 3, **caractérisé en ce que** la plus petite valeur de l'angle (α) est, pour l'ensemble des protubérances (5a, 5b, 5c), supérieur à 90°.

7. Pneu selon l'une quelconque des revendications 1 à 6, **caractérisé en ce que** chaque protubérance est constituée par la même composition de caoutchouc que la partie du flanc formant ladite surface extérieure (40).

8. Pneu selon l'une quelconque des revendications 1 à 7, **caractérisé en ce que** chaque protubérance comporte des incisions (5^{e}) disposées sensiblement dans un plan méridien, de hauteur radiale comprise entre 0,5 mm et 2 mm, espacées circonférentiellement d'un pas supérieur au double du maximum entre la profondeur des incisions et la hauteur (H) de la protubérance, et inférieur à 10 mm, de préférence entre 1,5 et 3 mm, de profondeur axiale comprise entre 25% et 50% de la hauteur de la protubérance.

9. Pneu selon l'une quelconque des revendications 1 à 7, **caractérisé en ce que** chaque protubérance comporte sur sa paroi de raccordement (53), selon la direction circonférentielle, une suite de surfaces concaves et convexes (5d) dont la hauteur crête-crête est supérieure à 2 mm et inférieure à 80 % de la hauteur de la protubérance.

## Patentansprüche

1. Reifen (1), umfassend eine Karkassenbewehrung (2), über der eine Scheitelbewehrung (3) liegt, über der wiederum ein Laufstreifen (7) liegt, wobei der Laufstreifen über zwei Flanken (4), die jeweils eine Außenfläche (40) aufweisen, mit zwei Wülsten (6) verbunden ist, wobei mindestens eine der Flanken mindestens zwei Umfangsvorsprünge (5a, 5b, 5c) aufweist, wobei jede Flanke (4) einen Äquatorpunkt (E) aufweist, der sich in der unbelasteten Referenzkonfiguration an der Außenfläche der Flanke radial an derselben Position wie der axial äußerste Punkt (20) der Karkassenbewehrung (2) befindet, wobei jeder Umfangsvorsprung (5a, 5b, 5c) durch eine radial obere Wand (51), durch eine radial untere Wand (52) und durch eine zwischen der radial oberen Wand (51) und der radial unteren Wand (52) befindliche Verbindungswand (53) begrenzt ist, wobei für jeden Umfangsvorsprung gilt:
• die Verbindungswand (53) ist im Wesentlichen parallel zur Karkassenbewehrung, die axial gegenüber der Verbindungswand (53) betrachtet wird,
• die radial obere Wand (51) ist im Wesentlichen kegelstumpfförmig,
• die Höhe (H) jedes Umfangsvorsprungs (5a, 5b, 5c), gemessen von der Außenfläche (40) in einer zur Karkassenbewehrung (2) im Wesentlichen senkrechten Richtung, ist größer als das Minimum des 0,8-fachen der am Äquator (E) gemessenen Gesamtdicke (T) der Flanke und 4 mm und kleiner als das Maximum des 1,6-fachen der Dicke (T) und 8 mm,
• in der Meridianebene in der Mitte des Kontaktbereichs des Reifens in gequetschter Konfiguration ist der Winkel α, den die radial äußere Wand (51) mit der radialen Richtung bildet,für den radial äußersten Vorsprung (5a) größer als 95°,
• die radial innerste Position der Verbindungswand (53) des radial innersten Vorsprungs (5c) befindet sich radial außerhalb des Äquatorpunkts (E),
wobei jeder Umfangsvorsprung **dadurch gekennzeichnet ist, dass**:
• bei jedem Vorsprung (5a, 5b, 5c) die gekrümmte Länge der Verbindungswand mehr als das 1,5-fache der Höhe des Vorsprungs beträgt.

2. Reifen nach Anspruch 1, **dadurch gekennzeichnet, dass** bei jedem Vorsprung (5a, 5b, 5c) die gekrümmte Länge der Verbindungswand mehr als das 2,5-fache der Höhe des Vorsprungs beträgt.

3. Reifen nach einem der vorangehenden Ansprüche, **dadurch gekennzeichnet, dass** jede Flanke mindestens drei Vorsprünge (5a und 5b und 5c) aufweist.

4. Reifen nach einem der vorangehenden Ansprüche, **dadurch gekennzeichnet, dass** der Winkel α beim radial äußersten Vorsprung (5a) mehr als 105° beträgt.

5. Reifen nach einem der Ansprüche 1 bis 3, **dadurch gekennzeichnet, dass** der Winkel α einen abnehmenden Wert hat, wenn man von einem Vorsprung zum nächsten geht und sich dem Äquator nähert.

6. Reifen nach einem der Ansprüche 1 bis 3, **dadurch gekennzeichnet, dass** der kleinste Wert des Winkels (α) für alle Vorsprünge (5a, 5b, 5c) größer als 90° ist.

7. Reifen nach einem der Ansprüche 1 bis 6, **dadurch gekennzeichnet, dass** jeder Vorsprung aus derselben Gummizusammensetzung gebildet ist wie der Teil der Flanke, der die Außenfläche (40) bildet.

8. Reifen nach einem der Ansprüche 1 bis 7, **dadurch gekennzeichnet, dass** jeder Vorsprung Einschnitte (5e) aufweist, die im Wesentlichen in einer Meridianebene angeordnet sind, eine radiale Höhe zwischen 0,5 mm und 2 mm aufweisen, in Umfangsrichtung um einen Schritt beabstandet sind, der größer als das Doppelte des Maximums zwischen der Tiefe der Einschnitte und der Höhe (H) des Vorsprungs und kleiner als 10 mm, vorzugsweise zwischen 1,5 und 3 mm, ist und eine axiale Tiefe zwischen 25 % und 50 % der Höhe des Vorsprungs aufweist.

9. Reifen nach einem der Ansprüche 1 bis 7, **dadurch gekennzeichnet, dass** jeder Vorsprung an seiner Verbindungswand (53) in der Umfangsrichtung eine Folge von konkaven und konvexen Flächen (5d) aufweist, deren Scheitel-zu-Scheitel-Höhe mehr als 2 mm und weniger als 80 % der Höhe des Vorsprungs beträgt.

## Claims

1. Tyre (1) comprising a carcass reinforcement (2) surmounted by a crown reinforcement (3), itself capped by a tread (7), the said tread being connected to two beads (6) via two sidewalls (4) each having an exterior surface (40), at least one of the said sidewalls comprising at least two circumferential protrusions (5a, 5b, 5c), each sidewall (4) comprising an equator point (E) situated on the exterior surface of the sidewall radially at the same position as the axially outermost point (20) of the carcass reinforcement (2) in the unladen reference configuration, each circumferential protrusion (5a, 5b, 5c) being bounded by a radially upper wall (51), by a radially lower wall (52), and by a connecting wall (53) situated between the radially upper wall (51) and the radially lower wall (52), where for each circumferential protrusion :
• the connecting wall (53) is substantially parallel to the carcass reinforcement considered axially facing the said connecting wall (53),
• the radially upper wall (51) is substantially frustoconical,
• the height (H) of each circumferential protrusion (5a, 5b, 5c), measured in a direction substantially perpendicular to the carcass reinforcement (2) from the said exterior surface (40) is greater than the least of 0.8 times the total thickness (T) of the sidewall as measured at the equator (E) and 4 mm, and less than the most of 1.6 times the said thickness (T) and 8 mm,
• in the meridian plane at the centre of the contact patch of the tyre in the compressed configuration, the angle α formed by the radially exterior wall (51) with the radial direction is, in the case of the radially outermost protrusion (5a), greater than 95°.
• the radially innermost position of the connecting wall (53) of the radially innermost protrusion (5c) is situated radially on the outside of the equator point (E), each circumferential protrusion being **characterized in that**:
• for each protrusion (5a, 5b, 5c), the curvilinear length of the connecting wall is greater than 1.5 times the height of the protrusion.

2. Tyre according to Claim 1, **characterized in that**, for each protrusion (5a, 5b, 5c), the curvilinear length of the connecting wall is greater than 2.5 times the height of the protrusion.

3. Tyre according to one of the preceding claims, **characterized in that** each sidewall comprises at least three protrusions (5a, 5b, 5c).

4. Tyre according to one of the preceding claims, **characterized in that** the said angle α is, for the radially outermost protrusion (5a), greater than 105°.

5. Tyre according to any one of Claims 1 to 3, **characterized in that** the said angle α is decreasing in value when moving on from one protrusion to the next in the direction toward the equator.

6. Tyre according to any one of Claims 1 to 3, **characterized in that** the smallest value for the angle (α), for all of the protrusions (5a, 5b, 5c), is greater than 90°.

7. Tyre according to any one of Claims 1 to 6, **characterized in that** each protusion is made up of the same rubber compound as the part of the sidewall that forms the said exterior surface (40).

8. Tyre according to any one of Claims 1 to 7, **characterized in that** each protrusion has sipes (5e), arranged substantially in a meridian plane, with a radial height of between 0.5 mm and 2 mm, spaced circumferentially by a spacing greater than twice the maximum of the depth of the sipes and the height (H) of the protrusion, and less than 10 mm, preferably between 1.5 and 3 mm, with an axial depth of between 25% and 50% of the height of the protrusion.

9. Tyre according to any one of Claims 1 to 7, **characterized in that** each protrusion has, on its connecting wall (53), in the circumferential direction, a series of concave and convex surfaces (5d), the peak-to-peak height of which is greater than 2 mm and less than 80% of the height of the protrusion.
